# EUROPEAN PATENT SPECIFICATION

(11) **EP 2 446 199 B1**
(45) Date of publication and mention of the grant of the patent: **25.02.2015**
(21) Application number: 10740263.8
(22) Date of filing: 24.06.2010
(51) Int. Cl.: F24J 2/54, F24J 2/14, F16C 19/52

(54) **SOLAR PLANT**
SOLARANLAGE
CENTRALE SOLAIRE

(30) Priority: 25.06.2009 IT UD20090121
(43) Date of publication of application: 02.05.2012
(73) Proprietor: D.D. SRL, 33036 Mereto di Tomba (IT)
(72) Inventor: DE CILLIA, Luigi, I-33036 Mereto di Tomba (IT); DURI', Giordano, I-33036 Mereto di Tomba (IT); ZULIANI, Gianfranco, I-33031 Basiliano (IT)
(74) Representative: Petraz, Davide Luigi
(86) International application number: PCT/IB2010/001526
(87) International publication number: WO 2010/150085

(56) References cited:
- EP-A2- 0 374 560
- DE-A1-102007 001 919
- US-A- 3 900 232
- US-A- 4 149 523
- US-A- 4 178 913
- US-A1- 2005 238 274
- US-B1- 6 502 995

## Description

### FIELD OF THE INVENTION

The present invention also concerns a solar plant which uses a mechanism for moving reflection plates.

### BACKGROUND OF THE INVENTION

Solar plants are known, in particular of the concentration type, in which a plurality of reflection plates or mirrors are suitably conformed, normally concave, in order to intercept and concentrate the sun's rays toward a common collector in which a saline or other solution flows, to accumulate energy.

It is known that the saline solution is then used to transform the accumulated energy into usable energy, for example electric, thermal or other.

Concentration solar plants are also known, in which the reflection plates are movable in order to be selectively oriented according to the azimuthal angle of the sun, following at least in part the daily movement thereof, and thus optimizing to the full the exploitation of the available solar energy.

Plants are also known in which the reflection plates are disposed in series on a number of rows and are assembled on a relative support frame, and as many as several dozen or at times hundreds of reflection plates are used.

The reflection plates in the same row are assembled on a common movement shaft which in its turn is assembled rotatable on the relative support frame.

It is also known that this arrangement to support and move the reflection plates used in solar plants is also used in other types of plant, for example photovoltaic plants, transmission and reception plants or others in which it is necessary to orientate a plurality of interception elements, whether they are photovoltaic panels, transceiver antennae or other.

It is known to provide, for all said types of known plants, the rotatable assembly of each shaft to a frame by means of brasses, bearings or other similar rotation mechanisms, advantageously disposed misaligned from the shaft in order to approach as near as possible, with their axis of rotation, to the barycenter of the plates.

In solar plant applications, but not only, it is known that all the support and rotation components are subject to high loads and heat variations, with consequent and coordinated variations in size.

Said variations in size, although they can be partly contained on a unitary scale, do entail in the whole of the plant a considerable dimensional range, in particular in a direction longitudinal to the shaft.

This dimensional range is particularly critical in correspondence with the rotation mechanisms, since it may cause the loss of design tolerances and stresses that cannot be sustained for long periods by the rotation mechanisms.

It is known to use oblique rolling bearings or similar in order to exploit their transverse tolerance and to support even light transverse loads.

This type of known bearing, as well as being more costly, does not however allow to support the loads and the transverse displacements of these applications, due to the heat variations.

Moreover, both in the solutions which use brasses and also in the solutions which use oblique rolling bearings torsion stresses may occur, distributed progressively along the length of the plant. The formation of said torsion stresses determines a loss in uniform positioning of the interception elements, thus varying the conditions of use and the correct functioning of the plant.

Document DE-A-102007001919 (DE'919) discloses an antifriction bearing mechanism for engine spindles of tool machines. DE'919 provides that the internal seatings for the rings and rolling balls are used to release the internal thermal dilatations together with the return pre-loaded system.

Document US-A-4,178,913 discloses a known solar collector system in which the axis of rotation of the reflecting surface coincides with the axis of the shafts or axles supporting said reflecting surface. In US'913 the rotation axle is associated with an universal joint that serves as angular compensator when external supporting bearings are mounted displaced from their aligned position.

Purpose of the present invention is to achieve a movement mechanism and to perfect a solar plant, which are simple and economical to produce, and which allow to move efficiently and precisely the interception elements supporting the transverse loads due to thermal dilations, and not only.

The Applicant has devised, tested and embodied the present invention to overcome the shortcomings of the state of the art and to obtain these and other purposes and advantages.

### SUMMARY OF THE INVENTION

The present invention is set forth and characterized in the independent claim, while the dependent claims describe other characteristics of the invention or variants to the main inventive idea.

In accordance with the above purpose, a movement mechanism is applied to move at least a reflection plate of a solar plant, for example of the concentration type; the plant comprises, as well as a reflection plate, a support frame on which the is assembled mobile in order to assume an optimized exposure to the sun's rays.

The movement mechanism is assembled on the support structure, and is constrained to one or more reflection plates in order to move them with respect to the frame.

The movement mechanism comprises a fixed body assembled on the support structure, a rotating shaft assembled rotatable inside the fixed body around an axis of rotation and constrained to the reflection plates.

The movement mechanism also comprises a plurality of rolling members, such as balls, rolls, rollers or other, disposed between relative sliding tracks. The sliding tracks are made annularly both on the fixed body and on the rotating shaft , substantially concentric to the axis of rotation, in order to promote the rotation conditions of the rotating shaft with respect to the fixed body.

According to a characteristic feature of the present invention, the movement mechanism comprises at least a compensation seating made on the fixed body and extending with respect to the sliding tracks in a direction substantially parallel to the axis of rotation, in order to define a controlled play of axial displacement of the rolling members.

In this way, a possible dimensional variation of the fixed body and/or the rotating shaft, due for example to a heat variation, is assisted by the movement of the rolling members inside the play defined by the relative compensation seatings, substantially without varying the mechanical conditions of rotation of the rotating shaft and the fixed body.

With the present invention the efficiency and precise movement of the reflection plates is therefore guaranteed in a simple and economic manner, even in the case of transverse loads on the movement mechanisms, due to heat variations and not only.

Moreover the possibility of movement of the rolling members inside the play defined by the compensation seatings allows to reduce to a minimum the possible torsion stresses, improving the conditions and the precision of rotation applied.

The fixed body comprises at least a ring-nut attached radially to the fixed body and on which the relative sliding track is made.

The compensation seating is made directly on the fixed body and the ring-nut is disposed axially mobile inside the compensation seating.

According to a variant, elastic contrast means are provided inside the compensation seating, for example made of elastomer, or mechanical such as springs or other, which allow to at least partly absorb the movement due to the heat variations.

The fixed body provides one or more attachment elements, integrated to it, in order to allow the direct or indirect attachment of the reflection plates to the movement mechanism.

By indirect attachment we mean, for example, a solution in which the rotating shaft is attached to a displacement element which defines a substantially cam connection with the reflection plate allowing to bring the axis of rotation of reflection plate the rotating body as near as possible to the barycenter of the reflection plate.

According to a variant, the solar plant also comprises a drive member kinematically connected to the movement mechanism in order to command the rotation of the rotating body.

According to another variant, the solar plant comprises at least a position transducer member, such as an encoder, operatively connected to the rotating body of the movement mechanism in order to control the rotation parameters thereof.

According to a further variant, the solar plant comprises a command and control unit able to coordinate, according to definable and/or predefined operating parameters, the activity of the drive member in relation to the data detected by the position transducer member.

### BRIEF DESCRIPTION OF THE DRAWINGS

These and other characteristics of the present invention will become apparent from the following description of a preferential form of embodiment, given as a non-restrictive example with reference to the attached drawings wherein:

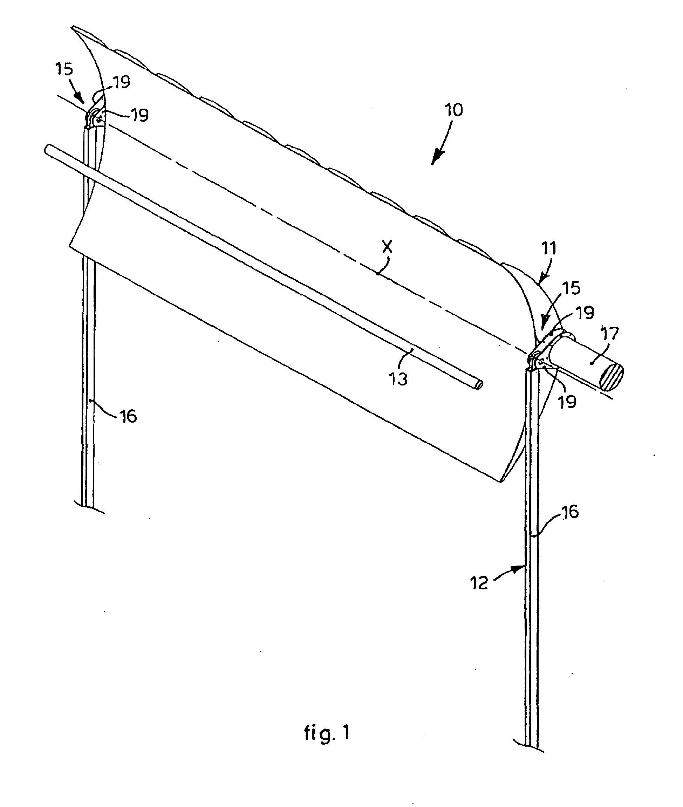

- fig. 1 schematically shows a three-dimensional view of a part of a concentration solar plant according to the present invention;

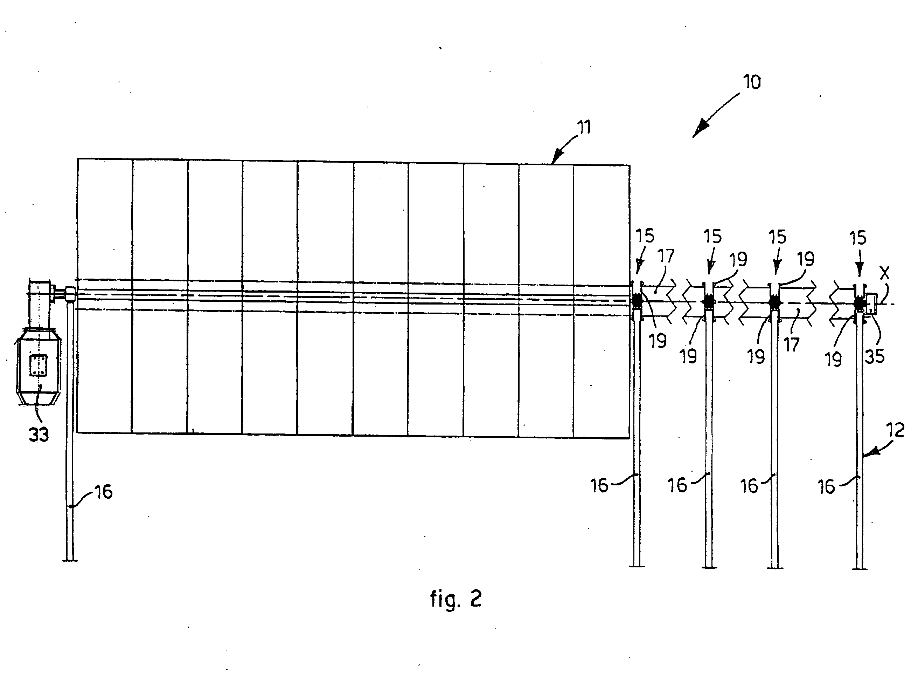

- fig. 2 shows a lateral view of a concentration solar plant according to the present invention;
- fig. 3 shows a movement mechanism not covered by the present invention, partly sectioned, of the type applied to the plant in fig. 2;
- fig. 4 shows an embodiment of a movement mechanism of the solar plant according to the present invention;
- fig. 5 shows a second
- fig. 6 shows a variant of fig. 3.

### DETAILED DESCRIPTION OF A PREFERENTIAL FORM OF EMBODIMENT

With reference to the attached drawings, a solar plant 10 according to the present invention in this case is of the concentration type, that is, one in which the sun's rays are concentrated toward suitable collectors 13, inside which a saline solution flows which functions as an energy accumulator. The energy thus accumulated is then transformed into usable energy, such as electric, thermal energy or other.

In particular the solar plant 10, according to the present invention comprises a plurality of reflection plates 11 and a support frame 12 on which the reflection plates 11 are assembled, according to a desired order.

The solar plant 10 also comprises a plurality of movement mechanisms 15 suitable to selectively move the reflection plates 11, individually or in groups, with respect to the support frame 12.

Each reflection plate 11 substantially consists of one or more mirrors disposed reciprocally to define a structure conformed substantially concave in order to reflect the sun's rays toward the collector 13.

Advantageously the collector 13 is positioned in correspondence with the point of focus defined by the mirror or mirrors which make up the reflection plate 11.

The support frame 12 comprises a plurality of support pedestals 16 attached to the ground and distanced with respect to each other in an orderly manner at a predefined distance. In a non-restrictive example, said distance is about 10-15 meters.

The support frame 12 comprises in this case a plurality of support shafts 17 disposed between the support pedestals 16, and on which the reflection plates 11 are able to be directly assembled.

As will be explained hereafter in detail, each support shaft 17 is assembled mobile on the support pedestals 16 by means of relative displacement brackets 19, attached to the ends of the relative support shaft 17 and in their turn attached to a relative movement mechanism 15.

Each movement mechanism 15 comprises a fixed body 20 attached to a relative support pedestal 16 and to a rotating shaft 21 assembled rotatable around an axis of rotation X, on the fixed body 20.

In particular, the fixed body 20 comprises a through hole 22 having a shape and sizes coordinated to those of the rotating shaft 21, so as to allow the through housing thereof inside it, with the possibility of rotating freely.

The movement mechanism 15 also comprises two crowns of rolling rollers 23, interposed, at a desired distance with respect to each other, between an external surface of the rotating shaft 21 and the through hole 22 of the fixed body 20.

The crowns of rolling rollers 23 allow to improve the rotation conditions of the rotating shaft 21 inside the through hole 22.

The rotating shaft 21 also comprises on each head end, a plurality of attachment holes 24, in which by means of known attachment systems, for example, screws, bushings or other, the displacement bracket 19 is attached.

The attachment thus made by means of the displacement bracket 19 defines a misaligned or substantially cam-type conformation of the support shaft 17 and the rotating shaft 21, so as to bring the axis of rotation X as near as possible to the barycenter of the reflection plates 11, so as to have an optimized rotation condition of the latter.

In particular, on the external surface of the rotating shaft 21 relative sliding tracks 25 are directly made, annular and concentric to the axis of rotation X.

Inside each sliding track 25 the rolling rollers 23 roll with precision.

The fixed body 20 comprises a pair of ring-nuts 26, which are disposed substantially parallel with respect to each other and concentric to the axis of rotation X.

On each ring-nut 26 a relative sliding track 27 is made, opposite and aligned to the relative sliding track 25 of the rotating shaft 21, on the opposite side with respect to the relative crowns of rolling rollers 23.

Each movement mechanism 15 also comprises one or more compensation seatings 30 which extend from both sides with respect to the sliding tracks 25 or 27, parallel to the axis of rotation X, in order to define an axial play of movement of the crowns of rolling rollers 23.

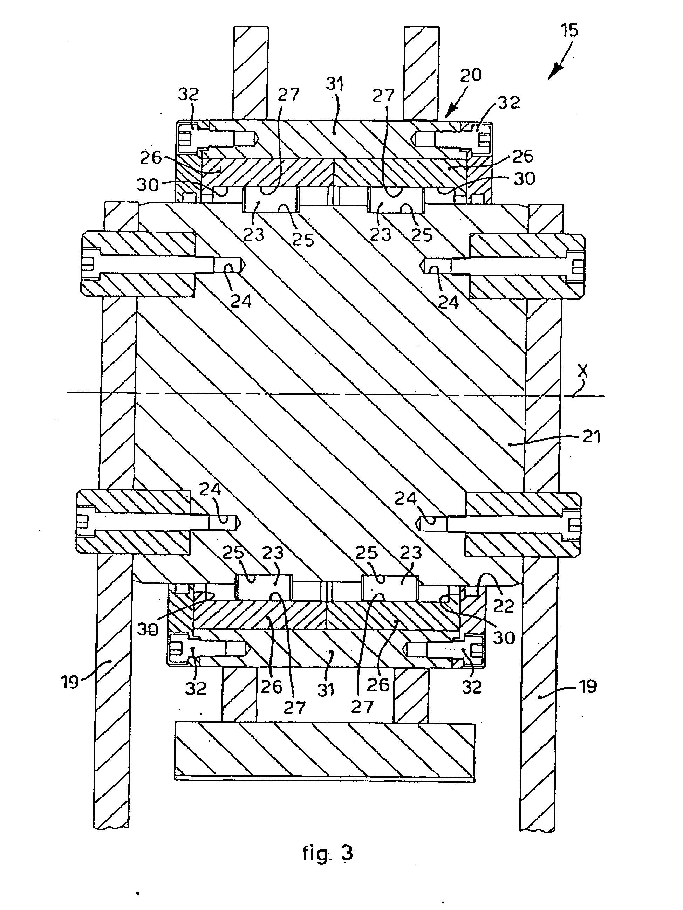

In the form shown in fig. 3, two compensation seatings 30 are provided, which are made on the ring-nuts 26 as a lateral extension of the sliding tracks 27.

Possible dilation, or possible contraction due to different thermal loads, determines the axial movement of the crowns of rolling rollers 23 inside the relative compensation seating 30.

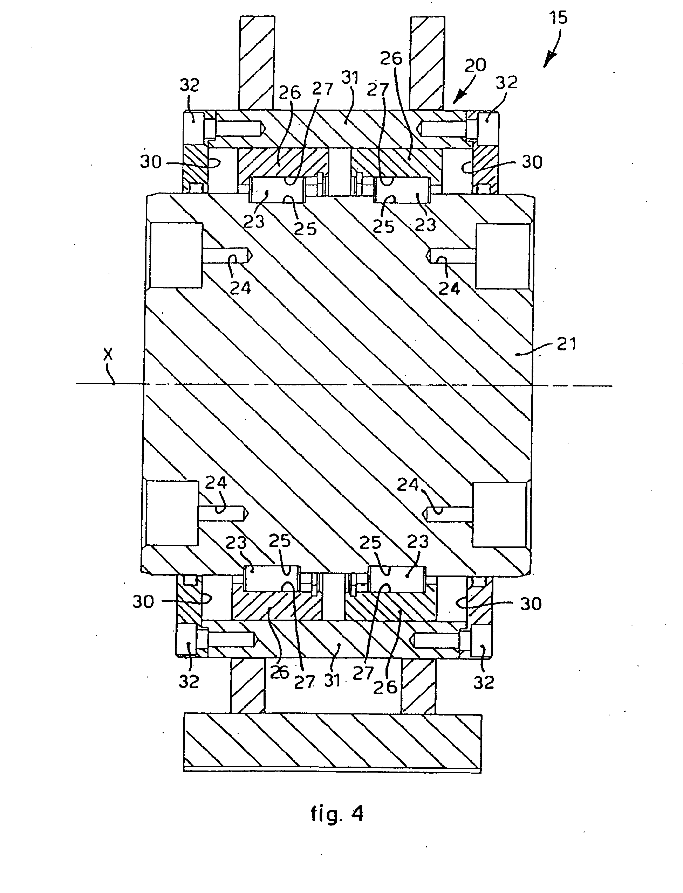

In the embodiment in fig. 4 on the contrary, a single compensation seating 30 is provided, made directly on the fixed body 20 and inside which the two ring-nuts 26 are disposed axially sliding.

In this solution, a possible dilation or possible contraction due to different thermal loads, determines the axial movement of the ring-nuts 26 with the relative rolling rollers 23 inside the compensation seating 30.

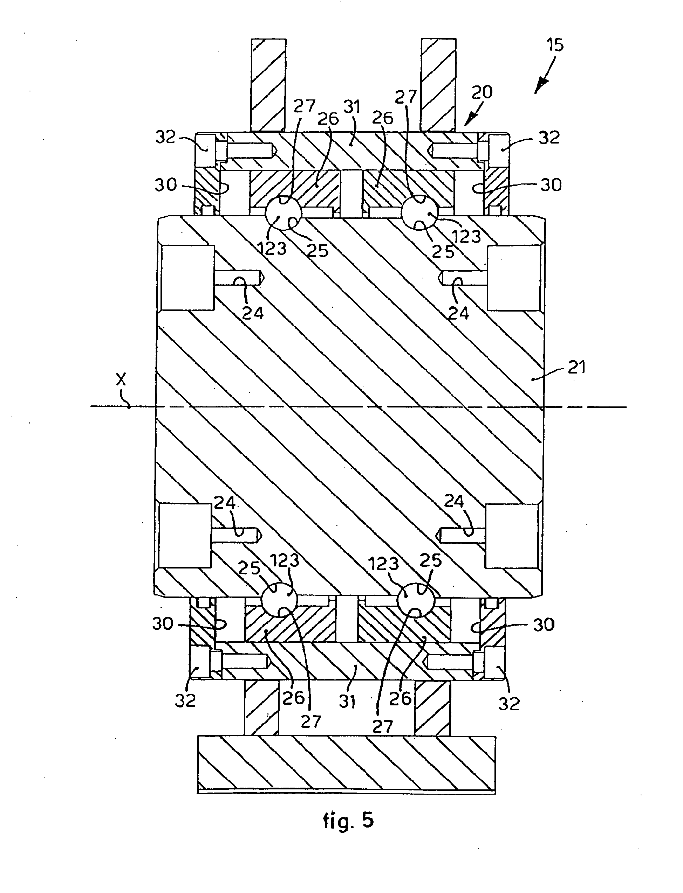

In the embodiment in fig. 5, the compensation seating 30 is made on the fixed body 20 as in the solution in fig. 4. In this solution, however, instead of the rolling rollers 23 two crowns of rolling balls 123 are provided.

In particular, in the solution in figs. 4 and 5, the compensation seating 30 is defined by an annular element 31 attached by means of screws 32 to the fixed body 20.

This solution allows to make a substantially airtight compensation seating 30, thus reducing to a minimum the maintenance needed and the possible intervention times.

The solar plant 10 also comprises a drive member 33 kinematically connected to the rotating shaft 21 of one of the movement mechanisms 15, so as to determine the controlled rotation thereof.

Since the rotating shafts 21 are kinematically connected with respect to each other by means of the displacement brackets 19 and the support shafts 17, the movement of a rotating shaft 21 results in the rotation of all the rotating shafts 21 of the movement mechanisms 15 provided.

Moreover, the solar plant 10 comprises an encoder 35 connected to one rotating shaft 21, advantageously opposite the one that is kinematically connected to the drive member 33, in order to check the rotation conditions of the rotating shaft 21.

A command and control unit, of the known type and not shown, is provided to coordinate, in a desired way, the activation of the drive member 33 with respect to the data detected by the encoder 35, and other functional parameters, such as the azimuthal angle of the sun or others.

It is clear, however, that modifications and/or additions of parts may be made to the solar plant 10 and to the movement mechanism 15 as described heretofore, without departing from the field and scope of the present invention.

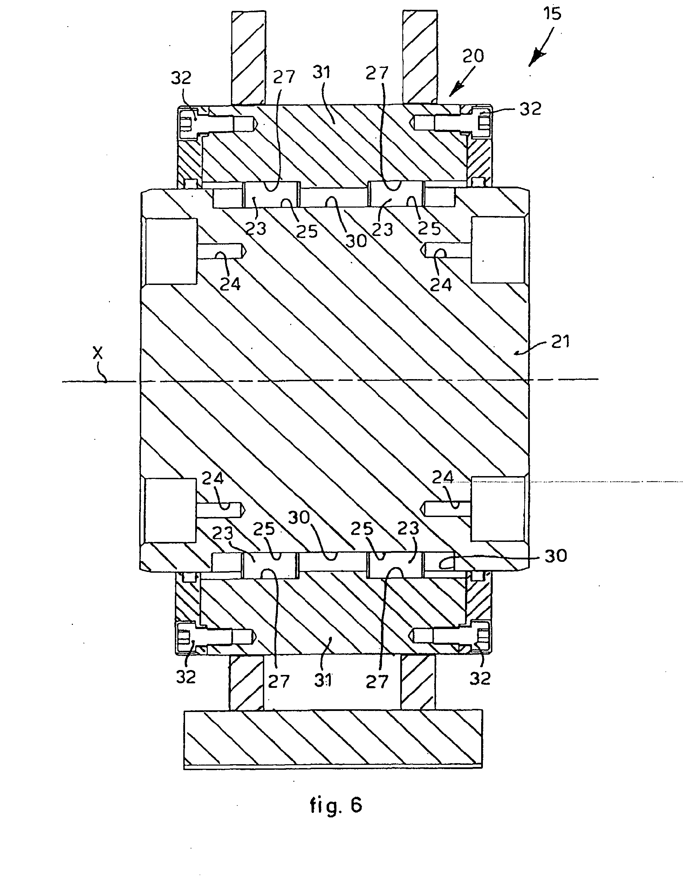

In a variant not covered by the present invention and shown in fig. 6, that the compensation seating 30 is made directly on the external surface of the rotating shaft 21, rather than on the base 20.

It also comes within the scope of the present invention to provide that elastic members, such as springs, elastomers or others are provided inside the compensation seatings, able to absorb the movements of the rolling rollers 23, or of the relative ring-nuts 26, during the dilations and contractions of the rotating shaft 21 and/or the base 20.

It is also clear that, although the present invention has been described with reference to some specific examples, a person of skill in the art shall certainly be able to achieve many other equivalent forms of movement mechanism and solar plants using said mechanism, having the characteristics as set forth in the claims and hence all coming within the field of protection defined thereby.

## Claims

1. Solar plant comprising at least a reflection plate (11), a support frame (12) on which said reflection plate (11) is assembled mobile to assume an optimized interception condition, said support frame (12) being provided with at least a support shaft (17) assembled mobile on support pedestals (16) by means of relative displacement brackets (19), attached to the ends of the relative support shaft (17) and in their turn attached to at least a movement mechanism (15), said at least a movement mechanism (15) being assembled on the support frame (12), and constrained to said reflection plate (11), in order to allow the movement thereof with respect to the support frame (12), said movement mechanism (15) comprising a fixed body (20) assembled on said support frame (12), a rotating shaft (21) assembled rotatable inside the fixed body (20) around an axis of rotation (X) and constrained to the reflection plate (11), the rotating shaft (21) comprising on each head end, a plurality of attachment holes (24), in which said displacement brackets (19) are attached, defining a misaligned or substantially cam-type conformation of the support shaft (17) and the rotating shaft (21), so as to bring the axis of rotation (X) as near as possible to the barycenter of the reflection plates (11) and a plurality of rolling members (23, 123) disposed rotating between relative first and second sliding tracks (25, 27) made both on the fixed body (20) and also on the rotating shaft (21), wherein the movement mechanism (15) comprises at least an axial compensation seating (30) made directly on the fixed body (20) and extending from both sides with respect to said sliding tracks (25, 27) in a direction substantially parallel to the axis of rotation (X), to define a controlled play of axial displacement of said rolling members (23, 123), wherein, on the external surface of the rotating shaft (21), the relative first sliding tracks (25) are directly made, annular and concentric to the axis of rotation (X), inside each sliding track (25) the rolling members (23, 123) being able to roll with precision, wherein said fixed body (20) comprises at least a ring-nut (26) attached radially to the fixed body (20) and on which the relative second sliding track (27) is made opposite and aligned to the relative first sliding track (25) of the rotating shaft (21), on the opposite side with respect to the corresponding rolling members (23, 123), wherein the ring-nut (26) is disposed axially mobile inside said compensation seating (30).

2. Plant as in claim 1, **characterized in that** for each movement mechanism (15) it comprises one or more attachment elements (32) able to allow the direct or indirect attachment of the reflection plate (11) to the fixed body (20).

3. Plant as in claim 1 or 2, **characterized in that** it also comprises at least a drive member (33) kinematically connected to the movement mechanism (15), to command the rotation of the rotating reflection plate (21).

4. Plant as in any claim from 1 to 3, **characterized in that** it comprises at least a position transducer member (35) operatively connected to the rotating shaft (21) of the movement mechanism (15), to control the parameters of rotation thereof.

5. Plant as in any claim from 1 to 4, **characterized in that** said movement mechanism (15) comprises elastic contrast means provided inside the compensation seating (30), to at least partly absorb the movement of the rolling members (23, 123).

6. Plant as in any claim from 1 to 5, **characterized in that** said rolling members comprise at least an annular crown of rolling rollers (23).

7. Plant as in any claim from 1 to 6, **characterized in that** said rolling members comprise at least an annular crown of rolling balls (123).

## Patentansprüche

1. Solaranlage, umfassend wenigstens eine Reflexionsplatte (11), einen Tragrahmen (12), auf dem die Reflexionsplatte (11) beweglich montiert ist, um einen optimierte Auffangzustand zu übernehmen, wobei der Tragrahmen (12) mit wenigstens einer Tragwelle (17) versehen ist, die mit Hilfe von entsprechenden Verschiebungsklammern (19), die an den Enden der entsprechenden Tragwelle (17) befestigt sind, und ihrerseits an wenigstens einem Bewegungsmechanismus (15) befestigt sind, beweglich auf Tragsockeln (16) montiert ist, wobei der wenigstens eine Bewegungsmechanismus (15) auf dem Tragrahmen (12) montiert ist und an die Reflexionsplatte (11) gezwungen wird, um deren Bewegung in Bezug auf den Tragrahmen (12) zu ermöglichen, wobei der Bewegungsmechanismus (15) ein feststehendes Gehäuse (20) umfasst, das auf dem Tragrahmen (12) montiert ist, eine Rotationswelle (21), die rotierbar innerhalb des feststehenden Gehäuses (20) um eine Rotationsachse (X) herum montiert ist und an die Reflexionsplatte (11) gezwungen wird, wobei die Rotationswelle (21) an jedem Kopfende eine Mehrzahl an Befestigungslöchern (24) umfasst, in denen die Verschiebungsklammern (19) befestigt sind, wodurch eine nicht fluchtende oder im wesentlichen nockenartige Form der Tragwelle (17) und der Rotationswelle (21) definiert wird, derart, dass die Rotationsachse (X) so nah wie möglich an den Schwerpunkt der Reflexionsplatten (11) gebracht wird, und eine Mehrzahl an Rollelementen (23, 123), die rotierend zwischen entsprechenden ersten und zweiten Gleitschienen (25, 27) angeordnet sind, die sowohl auf dem feststehenden Gehäuse (20) als auch auf der Rotationswelle (21) ausgebildet sind, wobei der Bewegungsmechanismus (15) wenigstens eine axiale Kompensationsauflage (30) umfasst, die direkt auf dem feststehenden Gehäuse (20) ausgebildet ist und sich von beiden Seiten in Bezug auf die Gleitschienen (25, 27) in einer Richtung im Wesentlichen parallel zu der Rotationsachse (X) erstreckt, um ein kontrolliertes Spiel axialer Verlagerung der Rollelemente (23, 123) zu definieren, wobei auf der äußeren Oberfläche der Rotationswelle (21) die entsprechenden ersten Gleitschienen (25) direkt, ringförmig und konzentrisch zu der Rotationsachse (X) ausgebildet sind, wobei innerhalb jeder Gleitschiene (25) die Rollelemente (23, 123) mit Genauigkeit rollen können, wobei das feststehende Gehäuse (20) wenigstens einen Gewindering (26) umfasst, der radial an dem feststehenden Gehäuse (20) befestigt ist und auf dem die entsprechende zweite Gleitschiene (27) gegenüberliegend und ausgerichtet mit der entsprechenden ersten Gleitschiene (25) der Rotationswelle (21) auf der gegenüber liegenden Seite in Bezug auf die entsprechenden Rollelemente (23, 123) ausgebildet ist, wobei der Gewindering (26) axial beweglich innerhalb der Kompensationsauflage (30) angeordnet ist.

2. Solaranlage gemäß Anspruch 1, **dadurch gekennzeichnet, dass** für jeden Bewegungsmechanismus (15) ein oder mehrere Befestigungselemente (32) vorgesehen sind, welche die direkte oder indirekte Befestigung der Reflexionsplatte (11) an dem feststehenden Gehäuse (20) ermöglichen.

3. Solaranlage gemäß Anspruch 1 oder 2, **dadurch gekennzeichnet, dass** sie ferner wenigstens ein Antriebselement (33) umfasst, das kinematisch mit dem Bewegungsmechanismus (15) verbunden ist, um die Rotation der Rotationswelle (21) zu steuern.

4. Solaranlage gemäß irgendeinem der Ansprüche 1 bis 3, **dadurch gekennzeichnet, dass** sie wenigstens ein Positionswandlerelement (35) umfasst, welches operativ mit der Rotationswelle (21) des Bewegungsmechanismus (15) verbunden ist, um deren Rotationsparameter zu steuern.

5. Solaranlage gemäß irgendeinem der Ansprüche 1 bis 4, **dadurch gekennzeichnet, dass** der Bewegungsmechanismus (15) elastische Gegenmittel umfasst, die innerhalb der Kompensationsauflage (30) vorgesehen sind, um die Bewegung der Rollelemente (23, 123) zumindest teilweise zu absorbieren.

6. Solaranlage gemäß irgendeinem der Ansprüche 1 bis 5, **dadurch gekennzeichnet, dass** die Rollelemente wenigstens einen ringförmigen Kranz rollender Rollen (23) umfassen.

7. Solaranlage gemäß irgendeinem der Ansprüche 1 bis 6, **dadurch gekennzeichnet, dass** die Rollelemente wenigstens einen ringförmigen Kranz rollender Kugeln (123) umfassen.

## Revendications

1. Centrale solaire comprenant au moins une plaque réfléchissante (11), un cadre de support (12) sur lequel ladite plaque réfléchissante (11) est assemblée de façon mobile pour prendre une condition d'interception optimisée, ledit cadre de support (12) étant pourvu d'au moins un arbre de support (17) assemblé de façon mobile sur des socles de support (16) au moyen d'appuis de déplacement relatifs (19), raccordés aux extrémités de l'arbre de support relatif (17) et à leur tour raccordés à au moins un mécanisme de mouvement (15), ledit au moins un mécanisme de mouvement (15) étant assemblé sur le cadre de support (12), et fixé à ladite plaque réfléchissante (11), afin de permettre le mouvement de celle-ci par rapport au cadre de support (12), ledit mécanisme de mouvement (15) comprenant un corps fixe (20) assemblé sur ledit cadre de support (12), un arbre rotatif (21) assemblé de façon rotative à l'intérieur du corps fixe (20) autour d'un axe de rotation (X) et fixé à la plaque réfléchissante (11), l'arbre rotatif (21) comprenant, sur chaque extrémité de tête, une pluralité de trous de raccordement (24), dans lesquels lesdits appuis de déplacement (19) sont raccordés, définissant une conformation désalignée ou sensiblement de type came de l'arbre de support (17) et du arbre rotatif (21), afin de mettre l'axe de rotation (X) aussi près que possible du centre de masse des plaques réfléchissantes (11) et une pluralité d'éléments roulants (23, 123) disposés de façon rotative entre des premier et second rails de coulissement (25, 27) relatifs réalisés tous les deux sur le corps fixe (20) et également sur l'arbre rotatif (21), dans laquelle le mécanisme de mouvement (15) comprend au moins une assise de compensation axiale (30) réalisée directement sur le corps fixe (20) et s'étendant à partir des deux côtés par rapport auxdits rails de coulissement (25, 27) dans une direction sensiblement parallèle à l'axe de rotation (X), pour définir un jeu commandé de déplacement axial desdits éléments roulants (23, 123), dans laquelle, sur la surface externe de l'arbre rotatif (21), les premiers rails de coulissement (25) relatifs sont réalisés directement, annulaires et concentriques à l'axe de rotation (X), à l'intérieur de chaque rail de coulissement (25) les éléments roulants (23, 123) étant capables de rouler avec précision, dans laquelle ledit corps fixe (20) comprend au moins un écrou à oeil (26) raccordé radialement au corps fixe (20) et sur laquelle le second rail de coulissement (27) relatif est réalisé de façon opposée au, et alignée avec le, premier rail de coulissement (25) relatif de l'arbre rotatif (21), sur le côté opposé par rapport aux éléments roulants correspondants (23, 123), dans laquelle l'écrou à oeil (26) est disposé de façon mobile axialement à l'intérieur de ladite assise de compensation (30).

2. Centrale selon la revendication 1, **caractérisée en ce que**, pour chaque mécanisme de mouvement (15), elle comprend un ou plusieurs éléments de raccordement (32) capables de permettre le raccordement direct ou indirect de la plaque réfléchissante (11) au corps fixe (20).

3. Centrale selon la revendication 1 ou 2, **caractérisée en ce qu'**elle comprend également au moins un élément d'entraînement (33) relié de façon cinématique au mécanisme de mouvement (15), pour commander la rotation de l'arbre rotatif (21).

4. Centrale selon une quelconque des revendications 1 à 3, **caractérisée en ce qu'**elle comprend au moins un élément transducteur de position (35) de façon opérationnelle connecté à l'arbre rotatif (21) du mécanisme de mouvement (15), pour commander les paramètres de rotation de celui-ci.

5. Centrale selon une quelconque des revendications 1 à 4, **caractérisée en ce que** ledit mécanisme de mouvement (15) comprend des moyens de contraste élastiques prévus à l'intérieur de l'assise de compensation (30), pour absorber au moins partiellement le mouvement des éléments roulants (23, 123).

6. Centrale selon une quelconque des revendications 1 à 5, **caractérisée en ce que** lesdits éléments roulants comprennent au moins une couronne annulaire de rouleaux roulants (23).

7. Centrale selon une quelconque des revendications 1 à 6, **caractérisée en ce que** lesdits éléments roulants comprennent au moins une couronne annulaire de billes roulantes (123).
